(19) Europäisches Patentamt
European Patent Office
Office européen des brevets

(11) EP 4 368 663 A1

# (12) EUROPEAN PATENT APPLICATION
published in accordance with Art. 153(4) EPC

(43) Date of publication:
**15.05.2024 Bulletin 2024/20**

(21) Application number: **22837614.1**

(22) Date of filing: **30.06.2022**

(51) International Patent Classification (IPC):
***C08J 9/228*** *(2006.01)* ***B29C 44/00*** *(2006.01)*
***B29C 44/44*** *(2006.01)*

(52) Cooperative Patent Classification (CPC):
**B29C 44/00; B29C 44/44; C08J 9/228**

(86) International application number:
**PCT/JP2022/026424**

(87) International publication number:
**WO 2023/282198 (12.01.2023 Gazette 2023/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **09.07.2021 JP 2021114569**

(71) Applicant: **Asahi Kasei Kabushiki Kaisha**
**Tokyo 1000006 (JP)**

(72) Inventors:
- **KATO Yumiko**
  **Tokyo 100-0006 (JP)**
- **MIZUTANI Taichi**
  **Tokyo 100-0006 (JP)**

(74) Representative: **D Young & Co LLP**
**3 Noble Street**
**London EC2V 7BQ (GB)**

## (54) FOAM BEADS, METHOD FOR PRODUCING SAME, AND FORMED BODY

(57) Provided are expandable beads containing a base material resin containing a thermoplastic resin, and having a heat shrinkage rate when heated at Tsp + 10 °C for 5 minutes of 30% or less, where Tsp is a softening point of the base material resin.

EP 4 368 663 A1

## Description

### TECHNICAL FIELD

The present disclosure relates to expandable beads, a method for producing the same, and a molded body.

### BACKGROUND

Conventionally, plastics and metals have been used as materials for internal parts of automobiles and electronic devices. Plastics are lightweight compared to metals etc., so their usage is expanding in electronic devices, miscellaneous goods, and automobile parts. However, from the viewpoint of reducing energy consumption and other factors, materials that are even lighter and possess excellent properties such as heat resistance are being sought. One such material is resin foam molded bodies. Among resin foam molded bodies, expandable bead molded bodies have recently been attracting attention because of their excellent formability and ability to form complex shapes with good reproducibility.

Expandable bead molded bodies can be formed into molded bodies of desired shapes by filling a molding die with expandable beads and heating them to cause them to fuse together. When a mold is filled with expandable beads during the molding process, voids occur between the expandable beads, which must be filled in some way. In general, this can be accomplished by several methods, exemplified by the method by compressing expandable beads and filling the resultant, and allowing them to expand to their original size within the mold to fill voids (compression filling method), the method by filling a mold with expandable beads while keeping the mold slightly open to increase the number of beads to be filled (cracking method), the method by applying pressure to expandable beads before molding so that a pressurized gas is retained within cells of the expandable beads to impart expandability, thereby allowing the expandable beads to expand during the heating process upon molding (impregnation method); and methods by combining the aforementioned methods, such as applying the impregnation method together with cracking with a small amount, for example.

Since the compression filling method compresses expandable beads, it is not suitable for resins that buckle when compressed, such as polystyrene. On the other hand, the cracking method has the disadvantage of increased weights of molded articles the number of beads to be filled increases. In addition, when a molded article has portions having different thicknesses, cracking can cause variations in the expansion ratio. For example, in the case of a molded article with portions with thicknesses of 10 mm and 3 mm, if the cracking amount (the distance of excess opening of the mold when the expandable beads are filled) is 1 mm, the portion with a thickness of 10 mm needs to be compressed $(10 + 1) / 10 = 1.1$ times, while the portion with a thickness of 3 mm needs to be compressed $(3 + 1) / 3 \cong 1.3$ times or more, which causes a variation in the expansion ratio. Additionally, as the number of beads to be filled increases for cracking, the force required to compress the beads for closing the mold increases, resulting in "mold open" where the mold is not fully closed. This leads to drawbacks in that and the thickness of the molded article is greater than the desired thickness or the thickness accuracy is reduced.

For these reasons, the impregnation method, which is applicable to any types of resin and can easily produce molded bodies with lighter weight, is widely used. To produce molded bodies having thinner and more complex shapes with high precision, expandable beads with excellent expandability are demanded.

On the other hand, an example of expandable beads with excellent heat resistance is known which is produced by foaming a blend resin of a polystyrene-based resin and a polyphenylene ether-based resin (PTL 1).

### CITATION LIST

#### Patent Literature

PTL1: WO 2011/019057 A1

### SUMMARY

#### (Technical Problem)

However, although the expandable beads disclosed in PLT 1 have excellent flame retardancy, their molding has only been applied to flat plates, and their application to molded bodies with complex shapes or smaller thicknesses, or having portions of different thicknesses requires improvement, and their use has been limited due to significant restrictions in design of shapes. In addition, cracking is required for molding, and application to automotive applications, where thickness accuracy is required, is difficult.

Therefore, the present disclosure is directed to providing expandable beads with excellent expandability upon

a molding process, a method of producing the same, and a molded body including the expandable beads.

(Solution to Problem)

In an attempt to solve the above problem, the present inventors discovered that expandable beads with a heat shrinkage rate of 30% or less at a specific temperature provide an excellent expandability upon the molding process, thereby completing the present disclosure.

Specifically, the present disclosure is as follows.

[1] Expandable beads comprising a base material resin containing a thermoplastic resin, and having a heat shrinkage rate when heated at Tsp + 10 °C for 5 minutes of 30% or less, where Tsp is a softening point of the base material resin.
[2] The expandable beads according to [1], wherein the softening point Tsp of the base material resin is 130 °C or higher.
[3] The expandable beads according to [1] or [2], wherein an average thickness of a skin layer defining a surface of the expandable beads is 0.2 to 2.0% of an average particle diameter of the expandable beads.
[4] The expandable beads according any one of [1] to [3], wherein the base material resin comprises a polyphenylene ether-based resin.
[5] A molded body comprising the expandable beads according to any one of [1] to [4].
[6] A method of producing the expandable beads according to any one of [1] to [5], comprising performing foaming at Tsp + 5 °C to Tsp + 40 °C.

(Advantageous Effect)

According to the present disclosure, it is possible to provide expandable beads with excellent expandability upon a molding process, a method for producing the same, and a molded body including the expandable beads.

BRIEF DESCRIPTION OF THE DRAWINGS

FIG. 1 is an image of a cross-section of an expandable bead of one embodiment of expandable beads according to the present disclosure observed under a scanning electron microscope (SEM) (magnification: 200×); and
FIG. 2 is a schematic diagram of a thickness-varied molded body molded in examples and comparative examples.

DETAILED DESCRIPTION

In the following, an embodiment for embodying the present disclosure (hereinafter, referred to as the "present embodiment") will be specifically described. The present disclosure is not limited to the following present embodiment and may be implemented with various changes made within the scope of the gist thereof.

[Expandable beads]

Expandable beads of the present embodiment include a base material resin containing a thermoplastic resin, and have a heat shrinkage rate when heated at Tsp + 10 °C for 5 minutes of 30% or less, where Tsp is the softening point of the base material resin.

The expandable beads of the present embodiment have a heat shrinkage rate when heated at Tsp + 10 °C for 5 minutes of 30% or less, preferably 28% or less, more preferably 25% or less. Moreover, the above heat shrinkage rate is preferably 2% or more, more preferably 3% or more, and even more preferably 5% or more. When the heat shrinkage rate is within the above range, an excellent expandability upon the molding process is achieved.

Here, the above heat shrinkage rate is a value calculated by $(1 - Xb / Xa) \times 100$ (%), where Xa (cc/g) is the expansion ratio of the expandable beads before they are heated at Tsp + 10 °C and Xb (cc/g) is the expansion ratio after the heating.

The expansion ratio of the expandable beads can be determined as V/W (cc/g), which is the value obtained by measuring the mass W (g) of the expandable beads, then measuring the volume V (cc) of the expandable beads by the submerged method, and dividing the volume V by the mass W.

As a result of the diligent study of the present inventors, it was discovered that the heat shrinkage rate after a heat treatment at Tsp + 10 °C for 5 minutes has a significant effect on the expandability of beads upon a molding process. The reason for this is not clear, but it is hypothesized that the residual stress in the expandable beads is small if the heat

shrinkage rate is 30% or less upon a heat treatment at Tsp + 10 °C for 5 minutes, and thus the resin is sufficiently resistant to the residual stress and can expand during molding. In contrast, if the heat shrinkage rate is greater than 30% upon a heat treatment at Tsp + 10 °C for 5 minutes, shrinkage of the beads is significant when heated during molding, making it difficult to obtain good molded articles without voids.

The method of achieving a heat shrinkage rate of 30% or less when treated at Tsp + 10 °C for 5 minutes is not limited, but a heat shrinkage rate in this range can be achieved, for example, by raising the foaming temperature to a higher temperature when the resin is foamed. Methods of raising the foaming temperature to a high temperature include hot air foaming and the like. Hot air foaming will be described below. Other heat treatments such as annealing may also be carried out.

In addition, the expansion ratio of the expandable beads of the present embodiment (expansion ratio Xa before the above heating) is not limited, but 1.5 to 30 cc/g is preferred, 2 to 20 cc/g is more preferred, and 3 to 18 cc/g is even more preferred. When the expansion ratio is in the range of 1.5 to 30 cc/g, it tends to be easier to maintain excellent moldability and strength while taking advantage of the benefits of lighter weight.

The expansion ratio can be controlled by adjusting the amount of a foaming agent contained (impregnated) in the base material resin, the heating temperature and time during foaming, and the leaving time of the base material resin impregnated with the foaming agent before foaming. As the amount of foaming agent impregnated is increased, the expansion ratio tends to be increased. Additionally, as the heating amount during foaming increases, i.e., the heating temperature is increased or the heating time is extended, the expansion ratios is increased. However, the amount of heating needs to be adjusted moderately because excessive foaming causes the cell membranes to rupture and shrinkage initiates.

When the expansion ratio is adjusted to the desired value in multiple steps, the primary expansion ratio is preferably 1.4 to 15 cc/g, more preferably 1.7 to 13 cc/g, and even more preferably 2 to 10 cc/g. When the primary expansion ratio is in this range, cell sizes are more likely to be uniform, and a secondary expanding capability can be imparted more readily.

The expandable beads of the present embodiment has an average particle diameter of preferably 0.5 to 10 mm, more preferably 0.7 to 7 mm, and even more preferably 0.8 to 5 mm. When the average particle diameter is in this range, it becomes easy to control the dissipation of gas (foaming agent) present within the cells of the expandable beads and maintain excellent foamability, while allowing for complex and fine molding.

The average particle diameter of the expandable beads can be adjusted by the expansion ratio and the average particle diameter of the base material resin.

The average particle diameter of the expandable beads is determined by measuring the circular equivalent diameter of 500 or more expandable beads using a digital microscope and calculating the average value to be used as the average particle diameter. More specifically, it can be measured with the method described in the Examples section below.

The average thickness of the skin layer defining the surface of the expandable beads of the present embodiment is preferably 0.2 to 2.0%, more preferably 0.25 to 1.8%, and even more preferably 0.3 to 1.5%, of the average particle diameter of the expandable beads.

Here, FIG. 1 is an SEM image (magnification: 200×) of a cross-section of one example of the expandable beads of the present embodiment. As illustrated in FIG. 1, the skin layer 1 of the expandable bead is the outermost layer that defines the surface of the expandable bead and is the portion that is made of a unformed base material resin (i.e., portion that does not include cells 2).

When the expandable beads are caused to expand by heating during a molding process, the skin layer which is the outermost layer defining the surface deforms the most significantly and is therefore more prone to rupture. If the skin layer ruptures, the gas in the cells of the expandable beads dissipates to the outside, resulting in reduced expandability. On the other hand, if the skin layer is too thick, the stress required to stretch and deform the skin layer becomes higher when the expandable beads are caused to expand by heating during the molding process, and the expandability is likely to be reduced. When the thickness of the skin layer is 0.2 to 2.0% of the average particle diameter of the expandable beads, the skin layer is less likely to rupture without causing inhibition of the expansion of the beads during the molding process, and the expandability of the expandable beads is more likely to be improved.

The skin layer is formed by dissipation of the blowing agent from the surface of the base material resin, and the thickness of the skin layer increases as the amount of dissipated blowing agent increases. Therefore, the thickness of the skin layer can be adjusted by controlling the concentration of the blowing agent, the amount of heat applied during foaming, the heating rate, and the leaving time of the base material resin impregnated with the blowing agent before foaming. The skin layer also tends to become thinner as the expansion ratio of the expandable beads increases. This is because the amount of stretching of the skin layer increases as the expansion ratio increases.

Note that the average thickness of the skin layer of the expandable beads is determined by the following method. First, expandable beads are cut into two by cutting them in a plane passing through the center thereof, and the cut surfaces are imaged using a scanning electron microscope (SEM). Then, in the obtained cross-sectional image, four

images are taken for one bead at the top, bottom, left, and right portions, and the thickness of the skin layer is measured for all cells at the outermost circumference in each of the obtained cross-sectional images. The arithmetic mean value of the smallest 10 values of each is determined, and the arithmetic mean value of the obtained values for the top, bottom, left and right portions is determined to be used as the thickness of the skin layer of that expandable bead. This operation is performed in the same manner for five or more expandable beads, and the arithmetic mean of the thicknesses of the skin layer of the expandable beads is determined to be used as the average thickness of the skin layer of the expandable beads (μm). More specifically, it can be measured with the method described in the Examples section below.

A higher closed cell ratio of the expandable beads is preferred, and it is preferably 50% or more, more preferably 60% or more, and even more preferably 80% or more. When the closed cell ratio is 50% or higher, the expandable beads tend to have better moldability into molded bodies.

The closed cell ratio S (%) of the expandable beads is the value calculated by a formula expressed by the following formula (1).

$$S\ (\%) = \{(Vx - W / \rho) / (Va - W / \rho)\} \times 100 \qquad \ldots (1)$$

(In the formula, Vx is the true volume ($cm^3$) of the expandable beads, Va is the apparent volume ($cm^3$) of the expandable beads (i.e., expansion ratio × mass), W is the mass (g) of the expandable beads, and ρ is the density ($g/cm^3$) of the base material resin of the expandable beads. The true volume Vx of the expandable beads can be measured using an air comparison specific gravity meter.)

The average cell diameter of the expandable beads is preferably from 5 to 200 μm, more preferably from 10 to 150 μm, and even more preferably from 15 to 100 μm.

Note that the average cell diameter of the expandable beads is the value obtained by the following method. First, an expandable bead is cut into two by cutting it in a plane through the center thereof, and a cut surface is imaged using a scanning electron microscope (SEM). Then, in the resulting cross-sectional image, straight lines equally spaced apart from each other in eight directions are drawn from the center of the cut surface of the expandable bead, and all the number of cells that intersect the straight lines are counted. The value obtained by dividing the total length of the straight lines by the total number of cells counted is determined as the cell diameter of the expandable beads. This operation is performed in the same manner for 10 or more expandable beads, and the arithmetic mean of the cell diameters of each expandable bead is determined as the average cell diameter of the expandable beads.

The shape of the expandable beads of the present embodiment may be any of various shapes without any specific limitations.

[[Base material resin]]

The expandable beads of the present embodiment includes a base material resin, and may be made of the base material resin.

The base material resin contains a thermoplastic resin and may further contain a flame retardant, a rubber component, and other ingredients.

The softening point Tsp of the base material resin of the expandable beads of the present embodiment is preferably 130 °C or higher, more preferably 131 to 270 °C, and even more preferably 135 to 250 °C. When the softening point Tsp of the base material resin is in the above range, better heat resistance of a foam molded body can be achieved.

Note that the softening point Tsp of the base material resin is determined by a dynamic viscoelasticity measurement as follows. The ratio (E1/E2) of the storage modulus E1 at a certain temperature T to the storage modulus E2 at the temperature of T minus 5 °C are determined. The softening point Tsp is the lowest T at which E1/E2 is 0.1 or less. In cases where E1/E2 is not 0.1 or less, the temperature T at which the value of E1/E2 is the smallest is determined as Tsp. Specifically, it can be measured by a method described in the subsequent EXAMPLES section.

Examples of the thermoplastic resins contained in the base material resin include polyolefin-based resins such as polyethylene, polypropylene, and EVA (ethylene-vinyl acetate copolymer), polyvinyl alcohol, polyvinyl chloride, polyvinylidene chloride, ABS (acrylonitrile-butadiene-styrene) resin, AS (acrylonitrile-styrene) resin, polystyrene-based resins, methacrylic resins, polyamide-based resins, polycarbonate-based resins, polyphenylene ether-based resins, polyimide-based resins, polyacetal-based resins, polyester-based resins, acrylic resins, cellulose-based resins, thermoplastic elastomers such as styrene-based, polyvinyl chloride-based, polyurethane-based, polyester-based, polyamide-based, 1,2-polybutadiene-based, fluororubber-based thermoplastic elastomers, thermoplastic engineering plastics such as polyamide-based, polyacetal-based, polyester-based, and fluorine-based thermoplastic engineering plastics, and powder rubber.

They may be used alone or in a combination of two or more. In addition, a modified and/or crosslinked resin may be used as long as the object of the present disclosure is not impaired.

Among these, thermoplastic resins including a polyphenylene ether-based resin and a polyamide-based resin are preferred from the viewpoint of heat resistance, and thermoplastic resins including a polyphenylene ether-based resin are more preferred from the viewpoint of processability.

In this specification, "polyphenylene ether-based resin" refers to a polymer represented by the following general formula (1).

Here, in the general formula (1), $R^1$, $R^2$, $R^3$, and $R^4$ each indicate, independently of one another, a hydrogen atom, a halogen atom, an alkyl group, an alkoxy group, a phenyl group, or a haloalkyl group or haloalkoxy group having at least two carbon atoms between a halogen and the benzene ring in general formula (1) and not including a tertiary $\alpha$-carbon atom.
Moreover, n is an integer that represents the degree of polymerization.

[Chem. 1]

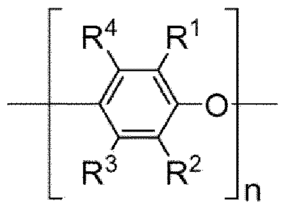

(1)

Polyphenylene ether-based resins having a weight average molecular weight of 20,000 to 60,000 are preferred.

In this specification, the weight average molecular weight is the weight average molecular weight that is determined by performing measurement of the resin by gel permeation chromatography (GPC) and determining the molecular weight of a peak in the chromatogram using a calibration curve that has been determined through measurement of commercially available standard polystyrenes (i.e., prepared using peak molecular weights of the standard polystyrenes). Specifically, the weight average molecular weight can be measured by using System 21 gel permeation chromatography manufactured by Showa Denko K. K., two K-805L columns manufactured by Showa Denko K. K. connected in series as columns, chloroform as the solvent, and setting a solvent flow rate to 1.0 mL/min and a column temperature to 40 °C. The UV wavelength of the detector is set as 254 nm for standard polystyrenes and 283 nm for polyphenylene ethers.

Examples of polyphenylene ether-based resins that may be used include, but are not limited to, poly(2,6-dimethyl-1,4-phenylene) ether, poly(2,6-diethyl-1,4-phenylene) ether, poly(2-methyl-6-ethyl-1,4-phenylene) ether, poly(2-methyl-6-propyl-1,4-phenylene) ether, poly(2,6-dipropyl-1,4-phenylene) ether, poly(2-ethyl-6-propyl-1,4-phenylene) ether, poly(2,6-dibutyl-1,4-phenylene) ether, poly(2,6-dilauryl-1,4-phenylene) ether, poly(2,6-diphenyl-1,4-diphenylene) ether, poly(2,6-dimethoxy-1,4-phenylene) ether, poly(2,6-diethoxy-1,4-phenylene) ether, poly(2-methoxy-6-ethoxy-1,4-phenylene) ether, poly(2-ethyl-6-stearyloxy-1,4-phenylene) ether, poly(2,6-dichloro-1,4-phenylene) ether, poly(2-methyl-6-phenyl-1,4-phenylene) ether, poly(2,6-dibenzyl-1,4-phenylene) ether, poly(2-ethoxy-1,4-phenylene) ether, poly(2-chloro-1,4-phenylene) ether, and poly(2,6-dibromo-1,4-phenylene) ether. Of these polyphenylene ether-based resins, those for which $R^1$ and $R^2$ are each an alkyl group having a carbon number of 1 to 4 and $R^3$ and $R^4$ are each a hydrogen or an alkyl group having a carbon number of 1 to 4, in particular, are preferable.

One of them may be used alone or two or more of them may be used in combination.

The polyphenylene ether-based resin, in particular, can improve load deflection temperature (HDT), maintain rigidity even in high heat environments, and provide good dimensional stability.

The polyphenylene ether-based resin can be mixed with one or more other resins, such as polystyrene-based resins, polyolefin-based resins as typified by polypropylene, engineering plastics as typified by polyamide, and super engineering plastics as typified by polyphenylene sulfide. Among these, the polyphenylene ether-based resin is preferably mixed with a polystyrene-based resin in view of improved processability.

The content of the polyphenylene ether-based resin in 100 mass% of the base material resin is preferably 30 mass% or more, more preferably 33 mass% or more, even more preferably 35 mass% or more, still even more preferably 40 mass% or more, and particularly preferably 50 mass% or more from the viewpoint of heat resistance. Furthermore, the content is preferably 94 mass% or less, more preferably 90 mass% or less, and even more preferably 85 mass% or less because the foaming temperatures and molding temperatures are reduced, excellent processability can be achieved, and general-purpose apparatuses can be used without requiring special apparatuses.

In this specification, the polystyrene-based resin refers to a homopolymer of styrene or a styrene derivative, as well as referring to a copolymer having styrene or a styrene derivative as a main component (component contained in a proportion of 50 mass% or more in the polystyrene-based resin).

Examples of the styrene derivative include, but are not limited to, o-methylstyrene, m-methylstyrene, p-methylstyrene, t-butylstyrene, $\alpha$-methylstyrene, $\beta$-methylstyrene, diphenylethylene, chlorostyrene, bromostyrene, or the like.

Examples of polystyrene-based resins that are homopolymers include polystyrene, poly(a-methylstyrene), and polychlorostyrene.

Examples of polystyrene-based resins that are copolymers include, but are not limited to, binary copolymers such as styrene-butadiene copolymer, styrene-acrylonitrile copolymer, styrene-maleic acid copolymer, styrene-maleic anhydride copolymer, styrene-maleimide copolymer, styrene-N-phenylmaleimide copolymer, styrene-N-alkylmaleimide copolymer, styrene-N-alkyl-substituted phenylmaleimide copolymer, styrene-acrylic acid copolymer, styrene-methacrylic acid copolymer, styrene-methyl acrylate copolymer, styrene-methyl methacrylate copolymer, styrene-n-alkyl acrylate copolymer, styrene-N-alkyl methacrylate copolymer, and ethyl vinyl benzenedivinylbenzene copolymer; and ternary copolymers such as ABS and butadiene-acrylonitrile-$\alpha$-methylbenzene copolymer.

In addition, graft copolymers such as styrene-grafted polyethylene, styrene-grafted ethylene-vinyl acetate copolymer, (styrene-acrylic acid)-grafted polyethylene, and styrene-grafted polyamide are exemplified.

One of them may be used alone or two or more of them may be used in combination.

Polystyrene-based resins having a weight average molecular weight of 180,000 to 500,000 are preferred.

In this specification, the weight average molecular weight is the weight average molecular weight that is determined by performing measurement of the resin by gel permeation chromatography (GPC) and determining the molecular weight of a peak in the chromatogram using a calibration curve that has been determined through measurement of commercially available standard polystyrenes (i.e., prepared using peak molecular weights of the standard polystyrenes). Specifically, the weight average molecular weight can be measured by using System 21 gel permeation chromatography manufactured by Showa Denko K. K., two K-805L columns manufactured by Showa Denko K. K. connected in series as columns, chloroform as the solvent, and setting a solvent flow rate to 1.0 mL/min and a column temperature to 40 °C. The UV wavelength of the detector is set as 254 nm for both standard polystyrenes and the polystyrene-based resin.

The content of the polystyrene-based resin in the base material resin is not limited, and is adjusted as appropriate so that the desired content the other ingredients is achieved.

Examples of the polyamide-based resin include polyamide a homopolymer, a polyamide copolymer, or a mixture thereof, for example.

Examples of the polyamide homopolymer include, for example, nylon 66, nylon 610, nylon 612, nylon 46, nylon 1212, or the like that is obtained through polycondensation of a diamine and a dicarboxylic acid; and nylon 6, nylon 12, or the like that is obtained through ring-opening polymerization of a lactam.

Examples of the polyamide copolymer include, for example, nylon 6/66, nylon 66/6, nylon 66/610, and nylon 66/612.

Of these examples, aliphatic polyamides are preferable, and nylon 6, nylon 66, nylon 6/66, nylon 66/6, and the like are more preferable.

One of these may be used individually, or two or more of these may be used in combination.

The melting point of polyamide-based resin is preferably 170 °C or higher, and more preferably 180 °C or higher, from the viewpoint of suppressing coloration of polyamide-based resin expandable beads and ensuring sufficient heat resistance of the foam molded body. From the viewpoint of promoting foaming of an unexpanded polyamide-based resin that has impregnated with a blowing agent, the melting point is preferably 270 °C or lower, and more preferably 250 °C or lower.

A compound, polymer, or the like including a substituent that can react with an amino group or carboxyl group of the polyamide-based resin may be used to increase the degree of crosslinking of the resin by forming a crosslinked structure via that substituent in molecule of the resin.

The base material resin may contain a flame retardant.

Flame retardants are classified into organic and inorganic flame retardants. Organic flame retardants include halogenated compounds, representative examples of which are bromine compounds and non-halogenated compounds, representative examples of which are phosphorus-based compounds and silicone-based compounds. Examples of inorganic flame retardants include metal hydroxides, representative examples of which are aluminum hydroxide and magnesium hydroxide, and antimony-based compounds, representative examples of which are antimony trioxide and antimony pentoxide.

Among the above flame retardants, non-halogenated flame retardants are preferred and phosphorus-based flame retardants are more preferred from an environmental viewpoint, but it is not limiting.

Examples of phosphate-based flame retardants include trimethyl phosphate, triethyl phosphate, tripropyl phosphate, tributyl phosphate, tripentyl phosphate, trihexyl phosphate, tricyclohexyl phosphate, triphenyl phosphate, tricresyl phosphate, trixylenyl phosphate, cresyl diphenyl phosphate, dicresyl phenyl phosphate, dimethyl ethyl phosphate, methyl dibutyl phosphate, ethyl dipropyl phosphate, hydroxyphenyl diphenyl phosphate, and resorcinol bisdiphenyl phosphate. Moreover, compounds of a type obtained through modification of any of the preceding examples with any of various substituents and various condensation-type phosphate ester compounds may be used.

The content of the flame retardant in the base material resin is preferably 5 to 30 parts by mass with respect to 100 parts by mass of thermoplastic resin. When the content of the flame retardant is 5 parts by mass or more, the desired flame retardancy is more easily achieved. Conversely, when the content is 30 parts or less, the plasticizing effect of the base material resin by the flame retardant becomes moderate and heat resistance is improved. Furthermore, the extensional viscosity of the resin during foaming is improved, the expansion ratio can be increased, and the closed cell ratio of the expandable beads is improved, resulting in superior moldability into a molded body.
It is more preferable for the base material resin to contain a rubber component from the viewpoint of improved foamability.
Examples of rubber components that may be used include butadiene, isoprene, 1,3-pentadiene, and the like, but are not limited thereto. Such a rubber component is preferably a component that is dispersed in a particulate form in a continuous phase formed of a polystyrene-based resin. The method by which any of these rubber components is added may be by adding the rubber component itself or by using a resin such as a styrene-based elastomer or a styrene-butadiene copolymer as a rubber component supply source. In the latter case, the ratio of rubber components (R) can be calculated by the following formula.

$$R = C \times Rs / 100$$

C: Rubber concentration in the rubber component source (mass%)
Rs: Content of rubber source in the base material resin (mass%)

The content of the rubber component in the base material resin is preferably 0.3 to 10% by mass, and more preferably 0.5 to 8% by mass. When the content is 0.3 mass% or more, the desired flame retardancy is more likely to be exhibited. Furthermore, when the content is 0.5 mass% or more, the resin has excellent flexibility and elongation, the foam cell membranes are less likely to rupture during foaming, the expansion ratio increases, and the expandable beads have excellent molding processability after foaming. On the other hand, if the content of the rubber component is 10% by mass or less, the desired flame retardancy can be easily achieved. Furthermore, when the content is 8 mass% or less, sufficient heat resistance can be achieved.
In addition to the above ingredients, other additives such as other thermoplastic resins, stabilizers, impact modifiers, lubricants, pigments, dyes, weathering modifiers, antistatic agents, impact modifiers, crystal nucleating agents, glass beads, inorganic fillers, cross-linking agents, and nuclear agents, e.g., talc, may be added to the extent that the purpose of the present disclosure is not impaired.
The content of the above additives in the base material resin is not limited as long as the purpose of the present disclosure is not impaired, but may be 30 parts or less, preferably 20 parts or less with respect to 100 parts by mass of thermoplastic resin.
Examples of the above stabilizers that can be used include organic antioxidants and heat stabilizers such as hindered phenol antioxidants, sulfuric antioxidants, phosphoric antioxidants, phosphite compounds, and thioether compounds; light stabilizers and ultraviolet absorbers such as those based on hindered amines, benzophenone, and imidazole; and metal deactivators.
One of these may be used individually, or two or more of these may be used in combination.
The shape of the base material resin is not limited, and examples include bead-shape, pellet-shape, spherical shapes, and irregularly shaped milled products.
The size (long diameter) of the base material resin is preferably 0.2 to 5.0 mm, more preferably 0.2 to 3.0 mm. When the sizes are in this range, the expandable beads that are obtained by foaming the base material resin have moderate sizes, become more handleable, and are capable of being more densely filled upon molding. As the length or diameter of the base material resin decrease, the surface area per unit volume increases. Consequently, during the foaming step or when left to stand before foaming, dispersion of the foaming agent from the surface is promoted, which leads to a tendency for the skin layer to become thicker. On the other hand, excessive dispersion of the foaming agent tends to make achieving a high expansion ratio difficult. When the size of the base material resin is within the above range, it becomes easier to obtain expandable beads with the desired expansion ratio while forming the skin layer into a desired thickness.

[Production method of expandable beads]

Next, a method of producing expandable beads of the present embodiment will be described.
The expandable beads of the present embodiment can be obtained by incorporating the foaming agent into the base material resin (by making the base material resin to be impregnated with the foaming agent) (impregnation step) and foaming the base material resin (foaming step).

In the impregnation step, a method to incorporate the blowing agent into the base material resin is not particularly limited, and a generally-used method can be applied. Examples of the method to incorporate the blowing agent include, for example, carrying out incorporation in a water medium utilizing suspension systems such as water (suspension impregnation), using thermal decomposition-type blowing agents such as sodium bicarbonate (blowing agent decomposition method), setting a gas to an atmosphere under a critical pressure or higher to convert the gas into a liquid phase, and bringing the liquid phase into contact with a base material resin (liquid phase impregnation), and bringing a base material resin into contact with a gas in a vapor phase under a high-pressure atmosphere of less than a critical pressure (vapor phase impregnation). Of these, particularly, the method to cause vapor phase impregnation of the gas under a high-pressure atmosphere of less than a critical pressure is preferred. The method to cause vapor phase impregnation improves the solubility of a gas into a resin as compared with suspension impregnation carried out under a high temperature condition, and is likely to increase the content of the blowing agent. As a result, a high expansion ratio is likely to be achieved, and cell sizes in the base material resin are also likely to be uniform. Similarly, the blowing agent decomposition method is carried out under a high temperature condition, and not all of the added thermal decomposition-type blowing agent is converted into a gas, and thus an amount of a gas to be generated is likely to be relatively small. Therefore, the vapor phase impregnation is advantageous in that the content of the blowing agent is likely to be increased. Further, vapor phase impregnation is advantageous in that the sizes of facilities, such as a pressure resistant apparatus and a cooling apparatus, are more likely to be made smaller than those of the liquid phase impregnation, and thereby costs of facilities are likely to be reduced.

Although the vapor phase impregnation conditions are not particularly limited, the atmosphere pressure is preferably 0.5 to 6.0 MPa, more preferably 1.0 to 5.0 MPa. The atmosphere temperature is preferably 5 to 30 °C, and more preferably 7 to 15 °C. Furthermore, the impregnation time is preferably 0.5 to 48 hours, and more preferably 1 to 24 hours. When the atmosphere pressure, the atmosphere temperature, and impregnation time are in the above-mentioned ranges, dissolution of a gas into the base material resin is likely to be promoted. Particularly, when the atmosphere temperature is low, the impregnation amount increases but an impregnating speed tends to be slow. When the atmosphere temperature is high, the impregnation amount decreases but the impregnating speed tends to be fast. In view of balancing these, it is preferable to set atmosphere temperature to the above-mentioned range so as to efficiently promote the dissolution of the gas into the base material resin.

The base material resin impregnated with the foaming agent by vapor phase impregnation may be left to stand at room temperature (23 to 25 °C) or in a preheated or otherwise warmed foaming machine (40 to 100 °C) for a certain period of time without heating before proceeding to the foaming step in order to adjust the expansion ratio and the thickness of the skin layer of the resulting expandable beads. When the base material resin is left to stand for a certain period of time, the foaming agent dissipates from the surface of the base material resin during that time period, and the expansion ratio of the resulting expandable beads tends to be reduced and the thickness of the skin layer tends to be increased as compared to cases where the base material resin is not left to stand.

The above-mentioned leaving time at room temperature is not particularly limited and may be set according to the desired expansion ratio and the desired thickness of the skin layer, but is preferably from 0 to 180 seconds, more preferably from 0 to 120 seconds, and even more preferably from 0 to 60 seconds.

The above-mentioned leaving time in the foaming machine (40 to 100 °C) is not limited and may be set according to the desired expansion ratio and the desired thickness of the skin layer, but is preferably from 0 to 30 seconds, more preferably from 0 to 20 seconds, and even more preferably from 0 to 10 seconds.

The blowing agent is not particularly limited, and generally-used gases can be used. Examples thereof include inorganic gases such as air, carbonic acid gas, nitrogen gas, oxygen gas, ammonia gas, hydrogen gas, argon gas, helium gas, and neon gas; fluorocarbons such as trichlorofluoromethane (R11), dichlorodifluoromethane (R12), chlorodifluoromethane (R22), tetrachlorodifluoroethane (R112), dichlorofluoroethane (R141b), chlorodifluoroethane (R142b), difluoroethane (R152a), HFC-245fa, HFC-236ea, HFC-245ca, and HFC-225ca; saturated hydrocarbons such as propane, n-butane, i-butane, n-pentane, i-pentane, and neopentane; ethers such as dimethyl ether, diethyl ether, methyl ethyl ether, isopropyl ether, n-butyl ether, diisopropyl ether, furan, furfural, 2-methylfuran, tetrahydropyran, and tetrahydropyran; ketones such as dimethyl ketone, methyl ethyl ketone, diethyl ketone, methyl n-propyl ketone, methyl n-butyl ketone, methyl i-butyl ketone, methyl n-amyl ketone, methyl n-hexyl ketone, ethyl n-propyl ketone, and ethyl n-butyl ketone; alcohols such as methanol, ethanol, propyl alcohol, i-propyl alcohol, butyl alcohol, i-butyl alcohol, and t-butyl alcohol; carboxylate esters such as methyl formate ester, ethyl formate ester, propyl formate ester, butyl formate ester, amyl formate ester, methyl propionate ester, and ethyl propionate ester; and chlorinated hydrocarbons such as methyl chloride and ethyl chloride.

An inorganic gas is preferred from the viewpoint safety of the gas. Furthermore, inorganic gases are less soluble in the resin compared to organic gases such as hydrocarbons, and they tend to disperse more easily from the surface of the base material resin, making it easier to form the skin layer. Inorganic gases can easily escape from the resin after the foaming step or molding step, which is beneficial in providing better dimensional stability over time of a molded body. Furthermore, plasticization of the resin by a residual gas is less likely to occur, and excellent heat resistance is likely to

advantageously exhibit from the earlier stage after molding. Of the inorganic gases, carbonic acid gas is preferred from the viewpoint of solubility into the resin and ease of handling, and the impregnation amount thereof is preferably 3 to 13% by mass, more preferably 3.5 to 10% by mass based on the resin.

When the amount of carbonic acid gas to be impregnated is 3% by mass or more, a higher expansion ratio is likely to be achieved and the cell sizes in the base material resin are less likely be varied, which is likely to reduce the variation of the expansion ratio of the base material resin. When the amount is 13 mass% or less, the cell size becomes adequate and it is easier to control the decrease in the closed cell ratio due to overfoaming.

When a polyamide-based resin is used as the thermoplastic resin to be contained in the base material resin, it is preferable that a polar solvent is caused to be included before foaming from the viewpoint of foamability.

Examples of the above polar solvent include water; alcohols such as methanol, ethanol, and isopropanol; and acetone. Among these, water, methanol, isopropanol, and acetone are preferred from the viewpoint of achieving excellent impregnation into the polyamide-based resin, reducing the foaming temperature, and obtaining polyamide-based resin expandable beads with particularly excellent yellow coloration control of the polyamide-based resin expandable beads and particularly high closed cell ratio.

One of the above polar solvents may be used alone, or two or more of these may be used in combination.

The method of causing a polar solvent to be included into the polyamide-based resin is not particularly limited, but may include methods such as immersing in the polar solvent (for example, in the solvent at a temperature of 30 to 80 °C) for a certain time period (for example, 0.5 to 10 hours), storing it in a high-temperature humid environment (for example, at a temperature of 30 to 50 °C and a relative humidity of 50 to 95%) for a certain time period, or spraying vapor of the polar solvent for a certain duration.

From the viewpoint of further preventing coloration during foaming, the inclusion mass ratio of the polar solvent included in the solvent-containing polyamide-based resin (solvent absorption ratio) is preferably 3 mass% or more, more preferably 5 mass% or more, even more preferably 6 mass% or more, and particularly preferably 7 mass% or more, with respect to 100% by mass of the polyamide-based resin in the solvent-containing polyamide-based resin. Moreover, from the viewpoint of obtaining expandable beads with a high closed cell ratio, the inclusion mass ratio is preferably 35 mass% or less, more preferably 25 mass% or less, even more preferably 20 mass% or less, and particularly preferably 11 mass% or less.

The inclusion mass ratio of the polar solvent in the solvent-containing polyamide-based resin may be adjusted, for example, by adjusting the temperature of the polar solvent to immerse, the time of immersion in the polar solvent, and the conditions for storage after the polar solvent is cause to be included.

The solvent-containing polyamide-based resin preferably contains the polar solvent uniformly from the viewpoint that the foaming temperature can be further reduced and coloration during foaming can be further suppressed.

For example, in a cross section in an arbitrary direction of a pellet of the solvent-containing polyamide-based resin, when a line segment connecting arbitrary two ends of the cross section passing through the center of gravity of the cross section is drawn and the total length thereof is taken as 100%, the inclusion mass ratios of the polar solvent in the area from 0 to 10% from one of the ends and in the area from 40 to 50% from that end are preferably both in the above range.

The inclusion mass ratio of the polar solvent in each of the above regions is the value obtained by $((Wa - W) / W) \times 100$ (mass%), where Wa is the mass of the solvent-containing polyamide-based resin and W is the mass of the polyamide-based resin before the polar solvent is caused to be contained (dried in a hot air drying facility at 60 °C for 24 hours). It can be obtained by measuring the inclusion mass ratio of the polar solvent using each of the above regions cut out.

The polar solvent remains on the resin surface of the solvent-containing polyamide-based resin is preferably removed after the polar solvent is caused to be included. Methods to remove the polar solvent from the surface include, for example, centrifugal dehydration of the resin.

The solvent-containing polyamide-based resin may be used for the subsequent step immediately after the polar solvent is caused to be included, or may be stored for a certain period of time. Storage can be done, for example, in an atmosphere containing the polar solvent (e.g., under humidification). Among them, from the viewpoint of further reducing the foaming temperature and further effectively preventing coloration during foaming, the solvent-containing polyamide-based resin is preferably used in the subsequent step continuously after the polar solvent is caused to be included.

Although a method for foaming the base material resin in the foaming step is not particularly limited, examples thereof include a method for exposing the base material resin under a high-pressure condition to a low-pressure atmosphere at once to make a gas dissolved in the base material resin to expand, and a method for heating a base material resin by pressurized vapor, hot air, or the like to make a gas dissolved in the base material resin to expand (heat foaming). Of these, the method for heating the base material resin to cause expansion is particularly preferable. This is because the method is likely to make the cell sizes in the base material resin uniform as compared with the method for exposing the base material resin under a high-pressure condition to a low-pressure atmosphere at once. The method is also advantageous in that control on the expansion ratio, particularly control on a low expansion ratio, is more easily achieved.

Furthermore, there is a drawback in that foaming begins simultaneously from all sites if the base material resin is exposed under a high-pressure condition to a low-pressure atmosphere at once, making formation of a skin layer difficult. On the other hand, in heat foaming, while the base material resin is heated from room temperature to the foaming initiation temperature, the foaming gas dissipates from the surface layer of the base material resin, which promotes formation of a skin layer. Additionally, there is an advantage in that the thickness of the skin layer can be controlled by controlling the heating rate or the heating temperature. A faster heating rate and a higher heating temperature tend to result in a thinner skin layer. When it is desired to increase the thickness of the skin layer, examples of the method to achieve this include leaving the base material resin to stand at room temperature (23 to 25 °C) for a certain time period before proceeding to the foaming step, or placing the base material resin into a foaming machine that has been preheated (40 to 100 °C), and then leaving it to stand without heating, thus allowing the foaming gas to disperse from the surface of the base material resin.

The heat source in heat foaming is preferably hot air from the viewpoint of ease of setting high temperatures and heating speed. When hot air is used to accelerate foaming at a higher temperature, the heat shrinkage rate tends to be 30% or less upon treatment at Tsp + 10 °C for 5 minutes. Pressurized vapor has drawbacks. As an example, the degree of temperature increase becomes more gradual than the degree of pressure increase as the temperature increases. Therefore, to achieve foaming at high temperatures, a high-pressure vessel is required. Additionally, increasing the pressure requires time, resulting in a slower foaming speed and a tendency for excessive dispersion of the foaming gas, which can lead to larger cell sizes near the skin layer. Further, in the case of foaming with pressurized vapor, it is considered that stress is not relieved and the heat shrinkage rate tends to be increased because water absorption and foaming occur simultaneously.

Examples of the method of expanding the gas dissolved in the base material resin with high-temperature hot air, so-called hot-air foaming, include, for example, a method of performing foaming in a hot air foaming machine that includes a cylindrical foaming device having a jacket on the outer side thereof and equipped with stirring blades in the center part and is capable of flowing hot air from a hot air blower from the bottom of the foaming device. By optimizing the air velocity and temperature of the hot air at this step, the heat shrinkage rate can be reduced to 30% or less upon treatment at Tsp + 10 °C for 5 minutes.

The foaming temperature in the foaming step is preferably the softening point Tsp of the base material resin + 5 °C or higher, and preferably Tsp + 10 °C or higher. Furthermore, the foaming temperature is preferably the softening point Tsp of the base material resin + 40 °C or lower, more preferably Tsp + 30 °C or lower, and even more preferably Tsp + 25 °C or lower. By setting the foaming temperature at Tsp + 5 °C or higher, the residual stress of the expandable beads at the molding processing temperature is reduced, and the heat shrinkage rate is more likely to be 30% or less when heated at Tsp + 10 °C for 5 minutes, which promotes expansion of the expandable beads. On the other hand, heating at a temperature higher than Tsp tends to cause "blocking," a phenomenon in which the expandable beads fuse to each other. This can be prevented by shortening the foaming time, agitating the expandable beads so that they are less likely to come into contact with each other, etc. In the case of foaming by pressurized vapor, since the temperature is increased through pressurization after the base material resin pellets are fed into a foaming machine, it takes time for the temperature to reach the desired temperature and blocking is likely to occur. On the other hand, in the case of foaming by hot air, the foaming time can be shortened because hot air set at the desired temperature can be supplied at the start of foaming. Furthermore, exposing the pellets to a high-temperature environment can promote the dispersion of the foaming gas from the surfaces of pellets, allowing for the formation of a suitable skin layer. In addition, by setting the foaming temperature to Tsp + 40 °C or lower, the residual stress during foaming tends to be reduced while suppressing blocking.

The foaming time in the foaming step is preferably 3 to 30 seconds, more preferably 5 to 20 seconds. When the foaming time is within the above range, blocking tends to be reduced while preventing dissipation of the impregnated gas.

The air velocity of hot air in hot air foaming can be adjusted according to the size and structure of the foaming machine and the feed amount of base material resin.

When the expandable beads are foamed to the desired expansion ratio, the foaming may be done to the desired expansion ratio in one stage in the foaming step, or may be done to the desired expansion ratio in multiple stages, including secondary foaming and tertiary foaming. When foaming is carried out in multiple stages, it is preferable to pressurize preliminary beads (i.e., beads that have not been foamed in the final stage) with an inorganic gas before foaming in each stage.

The gas used in the pressurizing treatment is not limited, but an inorganic gas is preferred from the viewpoint of flame retardance and the safety of the gas. Examples of the inorganic gas include air, carbonic acid gas, nitrogen gas, oxygen gas, ammonia gas, hydrogen gas, argon gas, helium gas, and neon gas. Air and carbonic acid gas are preferable in respect of ease of handling and costs, but the inorganic gas is not limited to these.

Although the method for the pressurizing treatment is not particularly limited, examples thereof include a method for filling a pressurized tank with preliminary beads and supplying an inorganic gas into the tank to pressurize the

preliminary beads.

[Method of forming expandable beads]

The expandable beads of the present embodiment can also be molded using general a molding method to obtain a molded body (molding step).

Examples of the molding method include, but are not limited to, a method for filling a molding die with expandable beads, heating the expandable beads to cause the beads to expand simultaneously with causing them to fuse together, and thereafter cooling and solidifying the beads for molding in a molding step.

Examples of a method for filling the expandable beads include, but are not limited to, a cracking method for filling a metal mold with beads while the metal mold is opened to some extent during filling, a compressing method for filling pressurized and compressed beads while a metal mold is kept closed, and a compression cracking method for performing cracking after compressed beads are filled.

It is preferable to carry out a pressurizing step of pressurizing expandable beads under an inorganic gas atmosphere before the expandable beads are filled. This is because cells in the expandable beads are imparted with a certain gas pressure by carrying out the pressurizing treatment, and which makes the expandable beads to be more uniformly expanded and molded.

Although a pressure source for carrying out the pressurizing treatment is not particularly limited, it is preferable to use an inorganic gas in respect of the flame retardancy, heat resistance, and the dimensional stability described above. Examples of the inorganic gas include air, carbonic acid gas, nitrogen gas, oxygen gas, ammonia gas, hydrogen gas, argon gas, helium gas, and neon gas. Air and carbonic acid gas are preferable in respect of ease of handling and costs, but the inorganic gas is not limited to these.

Although the method for the pressurizing treatment is not particularly limited, examples thereof include a method for filling a pressurized tank with expandable beads and supplying an inorganic gas into the tank to pressurize the beads.

When the expandable beads of the present embodiment are used, a molded body having a fine structure or a complicated structure can be produced by a well-known in-mold forming method, and their possible applications are expanded. Because the expandable beads of the present embodiment have excellent foamability during the molding process, voids between the beads can be filled even if the number of expandable beads filled is small. As a result, it is possible to provide excellent moldability without voids even in portions where filling expandable beads is difficult, such as thin portions or ribs Furthermore, even in the case of simple flat-plate molded bodies, if the number of beads filled is increased by means of cracking for molding large boards with a large molded area, a significant force is required to compress the beads for closing the mold. This can lead to a problem where the mold does not close completely, resulting in poor thickness accuracy. Since the beads of the present embodiment have excellent foamability, the extent of cracking is smaller than usual or cracking is unnecessary. This allows for molding with the mold being completely closed, resulting in excellent thickness accuracy. Furthermore, since the extent of cracking is smaller than usual or cracking is unnecessary, there is an advantage in that molded bodies with lower variation in expansion ratio can be obtained even the molded bodies have portions with different thicknesses. This is highly useful because the advantages of foamed articles, i.e., lightweightness and design freedom, are well-balanced.

Examples of the method of molding the expandable beads of the present embodiment include, for example, the decompression molding method (for example, JP S46-38359 B), which uses a pair of molding dies for in-mold forming of conventional expandable beads, fills the molding die cavity with the expandable beads under a pressurized atmosphere pressure or a reduced pressure, closes the dies, compresses the molding die cavity so that a volume of the molding die cavity is decreased by 0 to 70%, and thereafter supplies a heat medium, such as steam, into the dies to heat the expandable beads, thereby heat fusing the expandable beads; and the pressurized molding method (for example, JP S51-22951 B) which subjects expandable beads to a pressurizing treatment using a pressure gas in advance to increase the pressure inside the expandable beads to enhance a secondary expanding property of the expandable beads, fills a molding die cavity with the expandable beads under an atmospheric pressure or a reduced pressure while maintaining the secondary expanding property, closes the dies, and thereafter supplies a heat medium, such as steam, into the dies to heat the expandable beads, thereby heat fusing the expandable beads.

Molding can be achieved by a compression filling casting method for filling a cavity pressurized to an atmospheric pressure or greater by a compressed gas with expandable beads pressurized to that pressure or greater, and thereafter supplying a heat medium, such as steam, into the cavity to heat the expandable beads, thereby heat fusing the expandable beads (JP H4-46217 B). In addition, molding can be also achieved by a normal-pressure filling molding method (JP H6-49795 B) in which expandable beads obtained under a special condition to have a high secondary expanding capability are used, the expandable beads are filled in a cavity of a pair of molding dies under an atmospheric pressure or a reduced pressure, and thereafter supplies heat media such as steam to heat the expandable beads, thereby heat fusing the expandable beads, or a method obtained by combining the above-mentioned methods (JP H6-22919 B).

Although the expansion ratio of the molded body using the expandable beads of the present embodiment is

not particularly limited, the expansion ratio is preferably 1.5 to 40 cc/g, and more preferably 2 to 25 cc/g. When the expansion ratio is in the range of 1.5 to 40 cc/g, it tends to be easier to maintain excellent strength while taking advantage of the benefits of lightweightness.

EXAMPLES

Next, the present disclosure will be described more specifically with reference to examples and comparative examples. The present disclosure, however, is not limited by the following examples.

Evaluation methods used in the examples and comparative examples are described below.

(1) Softening point of base material resin

Viscoelasticity measurements were performed on a base material resin using a rheometer (trade name: Physica MCR301, manufactured by Anton Paar) under the following conditions. At each measurement point which was higher than the starting temperature by 5 °C or more, the ratio (E1/E2) of the storage modulus (E1) at the measurement temperature (T) to the storage modulus (E2) at the temperature of T minus 5 °C was calculated. The lowest temperature (°C) among T at which E1/E2 was 0.1 or less was determined as the softening point Tsp of the base material resin. In cases where E1/E2 was not 0.1 or less, the temperature T at which the value of E1/E2 was the smallest was determined as Tsp.

Measurement jig: SRF10
Measurement mode: vibration $\phi$, $\gamma$
Strain: 0.015%
Frequency: 1 Hz
Measurement temperature: 20 °C to 250 °C
Temperature increasing rate: 2 °C/min
Normal force: -0.3 N
Measurement point: 160
Unit of time: s

(2) Expansion ratios of expandable beads and large board molded body

After the mass W (g) of each of expandable beads and a large board molded body was measured, the volume V (cc) was measured by a submergence method. The Value V/W (cc/g) obtained by dividing the volume by the mass was defined as the expansion ratio (cc/g).

(3) Heat shrinkage rate of expandable beads

On a metal tray, 20 cc of expandable beads were placed so as not to overlap each other. The tray was placed in an oven set at the softening point Tsp of the base material resin + 10 °C and was removed from the oven after 5 minutes. After cooling to room temperature, the expansion ratio Xb after heating was determined by the method described in (2), and the heat shrinkage rate (%) was calculated by the following formula.

$$(1 - Xb / Xa) \times 100(\%)$$

Xa: Expansion ratio before heating (cc/g)
Xb: Expansion ratio after heating (cc/g)

(4) Average particle diameter of expandable beads

An orthographic projection image of expandable bead particles was obtained by placing them on a transparent Petri dish and observing them under a digital microscope (product name: VHX-2000, manufactured by Keyence Corporation) by illuminating from the direction opposite to the lens having the expandable bead interposed therebetween. Image analysis software (equipped with VHX-2000 digital microscope manufactured by Keyence Corporation) was used to measure the circular equivalent diameter of each expandable bead. At this time, beads which were at the ends of the image and of which entire image was not observed were excluded. The number of expandable beads that can be measured at once depends on the size of the expandable beads. The measurements were repeated until the total

number of measurements reached 500, and the arithmetic mean was calculated to be used as the average particle diameter (mm).

(5) Average thickness of skin layer of expandable beads

The expandable beads were cut in two by cutting them in a plane passing through center thereof, and cut surfaces were imaged using a scanning electron microscope (product name: VE-9800, manufactured by Keyence Corporation) in auto observation mode at a magnification of 200× and an acceleration voltage of 1.3 kV (image B). Four images were taken for one bead at the top, bottom, left, and right portions, and the thickness of the skin layer was measured for all cells present at the outermost circumference in each of the obtained cross-sectional images. The arithmetic mean value of the smallest 10 values of each was determined, and the arithmetic mean value of the obtained values for the top, bottom, left and right portions was determined to be used as the thickness of the skin layer of that expandable bead. This operation was performed in the same manner for five or more expandable beads, and the arithmetic mean of the thicknesses of the skin layer of the expandable beads was determined to be used as the average thickness of the skin layer of the expandable beads (μm).

From the average thickness of the skin layer and the average particle diameter of the expandable beads obtained, the ratio of the average thickness of the skin layer to the average particle diameter of the expandable beads (%) was determined.

(6) External appearance of molded body

The external appearances of molded bodies obtained by molding with a mold for large board molded bodies and a mold for thickness-varied molded bodies were evaluated visually.

O (Good): No void was observed
X (Not good): Voids were observed

(7) Thickness accuracy of large board molded body

Molded boards (large board molded body) of 1000 mm × 1200 mm × 10 mm in thickness were produced, and thicknesses were measured at a total of nine locations in plan view: four corners, the center of each side, and the center of the molding body. The difference between the maximum and minimum values was used as the variation, and the thickness accuracy was evaluated according to the following evaluation criteria.

O (Good): Variation was less than 0.3 mm
X (Not good): Variation was 0.3 mm or more

(8) Variation of expansion ratio of thickness-varied molded body

Molded bodies with 150 mm in width, 150 mm in depth, and 10 to 3 mm in thickness (FIG. 1) were produced and cut at points where the thickness varied to obtain two molded bodies of 30 mm in width, 150 mm in depth, and 10 mm in thickness, two molded bodies of 5 mm in thickness, and one molded body of 3 mm in thickness. The expansion ratio of each molded body was measured by the method described in (2), the difference between the maximum value and minimum value was used as the variation, and the variation of the expansion ratio was evaluated according to the following evaluation criteria.

O (Good): Variation was less than 1.0 cc/g
X (Not good): Variation was 1.0 cc/g or more

[Example 1]

To 100 mass parts of a thermoplastic resin including 73 mass% of S201A (produced by Asahi Kasei Corporation) as a polyphenylene ether-based resin (PPE), 12 mass% of a high-impact polystyrene resin (HIPS) with a rubber concentration of 6 mass% (the content of the rubber component in the base material resin was 0.6%), and 15 mass% of GP685 (manufactured by PS Japan Corporation) as a general-purpose polystyrene resin (PS), 22 mass parts of bisphenol A-bis(diphenyl phosphate) (BDP) were added as a non-halogen flame retardant. The mixture was extruded using an extruder after being heated and melted kneaded to produce base material resin pellets.

The Tsp of the resulting base material resin was 140 °C.

After a pressure-resistant vessel was charged with the base material resin pellets according to the method described in Example 1 of JP H4-372630 A, and the gas in the container was replaced with dry air. Then carbon dioxide gas was injected as a blowing agent, and the base material resin pellets were impregnated with 7% by mass of carbon dioxide for 3 hours under conditions of a pressure of 3.0 MPa and a temperature of 10 °C.
The base material resin pellets were fed into a mesh cage and heated with hot air at 153 °C for 20 seconds while stirring to produce expandable beads.
To carry out a pressurizing treatment, the pressure of the expandable beads was increased to 0.4 MPa over 1 hour, and then kept at 0.4 MPa for 8 hours. The resultant was filled into an in-mold mold with water vapor holes in which a mold for large board molded bodies (1000 mm × 1200 mm × 10 mm in thickness) was disposed, the cracking was set to 0 mm, and the expandable beads were heated with pressurized water vapor to cause them to expand and fuse with each other, and then cooled and removed from the molding mold. The thickness accuracy of the resulting moldings was excellent.
In addition, the mold was replaced with a mold for molded bodies having portions with different thicknesses (thickness-varied molded body) of the shape illustrated in FIG. 2, and the molding was performed in the same manner. The external appearance of the resulting molded body was good, with no voids even at the portion with a thickness of 3 mm. The variation of the expansion ratio was also good, with almost no difference due to the difference in thickness.
The results of each measurement and evaluation of the obtained expandable beads and molded bodies are summarized in Table 1.

[Example 2]

Expandable beads and each of molded bodies were prepared and evaluated in the same manner as in Example 1, except that the base material resin pellets after impregnation with the foaming agent were left to stand at room temperature for 30 seconds before foaming was performed.
The expansion ratio of the resulting expandable beads was slightly lower than in that in Example 1 because carbon dioxide escaped while the base material resin pellets after impregnation were left to stand. However, the ratio of the average thickness of the skin layer to the average particle diameter was increased.
The large board molded body exhibited excellent thickness accuracy and external appearance as in Example 1, and there was almost no variation in the expansion ratio due to the difference in thickness of the thickness-varied molded body.
The results of each measurement and evaluation of the obtained expandable beads and molded bodies are summarized in Table 1.

[Example 3]

Expandable beads and each of molded bodies were prepared and evaluated in the same manner as in Example 1, except the foaming temperature was set to 165 °C.
The large board molded body exhibited excellent thickness accuracy and external appearance as in Example 1, and there was almost no variation in the expansion ratio due to the difference in thickness of the thickness-varied molded body.
The results of each measurement and evaluation of the obtained expandable beads and molded bodies are summarized in Table 1.

[Example 4]

A thermoplastic resin containing 40 mass% of S201A (manufactured by Asahi Kasei Corporation) as the polyphenylene ether-based resin (PPE) and 60 mass% of GP685 (manufactured by PS Japan Corporation) as the general-purpose polystyrene resin (PS) was extruded using an extruder after being heated and melted kneaded to produce base material resin pellets.
The Tsp of the resulting base material resin was 150 °C.
Expandable beads and molded bodies were prepared using these base material resin pellets and evaluated in the same manner as in Example 1, except the foaming temperature was set to 157 °C.
The large board molded body exhibited excellent thickness accuracy and external appearance as in Example 1, and there was almost no variation in the expansion ratio due to the difference in thickness of the thickness-varied molded body.
The results of each measurement and evaluation of the obtained expandable beads and molded bodies are summarized in Table 1.

[Comparative Example 1]

The same base material resin as in Example 1 was impregnated with carbon dioxide gas in the same manner as in Example 1. The base material resin was then foamed in a foaming furnace with pressurized water vapor while the stirring blade was rotated at 77 rpm to yield expandable beads. The foaming temperature at this time was 143 °C.
The resulting expandable beads were molded with cracking of 0 mm as in Example 1. Voids were observed in both the large board molded body and the thickness-varied molded body, and the external appearance was inferior. In particular, the number of voids increased as the thickness of the thickness-varied molded body decreased, and a large number of voids were observed in the portion with a thickness of 3 mm. In the thickness-varied molded body, the thin portions were less likely to be filled with beads compared to the thick portions, and the amount of beads per unit volume was lower, resulting in a higher expansion ratio and greater variation.
The results of each measurement and evaluation of the obtained expandable beads and molded bodies are summarized in Table 1.

[Comparative Example 2]

The same expandable beads as in Comparative Example 1 were used, the cracking was set to 2 mm, and the molding was performed as in Comparative Example 1. As a result, the external appearance of the large board molded body was improved, but the thickness accuracy was greatly reduced and the expansion ratio of the molding was considerably lower than that in Example 1. The external appearance of the thickness-varied molded body was similarly improved, but the variation in expansion ratio was very large.
The results of each measurement and evaluation of the obtained expandable beads and molded bodies are summarized in Table 1.

[Comparative Example 3]

A thermoplastic resin containing 30 mass% of S201A (manufactured by Asahi Kasei Corporation) as the polyphenylene ether-based resin (PPE) and 70 mass% of GP685 (manufactured by PS Japan Corporation) as the general-purpose polystyrene resin (PS) was extruded using an extruder after being heated and melted kneaded to produce base material resin pellets.
The Tsp of the resulting base material resin was 144 °C.
The base material resin pellets were charged into a pressure-resistant container, the gas in the container was replaced with dry air, and carbon dioxide gas was injected as a foaming agent to impregnate the base material resin pellets with 6 mass% of carbon dioxide over 3 hours under conditions of a pressure of 2.3 MPa and a temperature of 20 °C.
The base material resin pellets were foamed in a foaming furnace with pressurized water vapor while the stirring blade was rotated at 77 rpm to yield expandable beads. The foaming temperature at this time was 143 °C.
The resulting expandable beads were molded with cracking of 0 mm as in Example 1. As in Comparative Example 1, voids were observed in both the large board molded body and the thickness-varied molded body, and the external appearance was inferior. As in Comparative Example 1, the variation of the expansion ratio of the thickness-varied molded body was also significant.
The results of each measurement and evaluation of the obtained expandable beads and molded bodies are summarized in Table 1.

[Comparative Example 4]

A thermoplastic resin containing 20 mass% of S201A (manufactured by Asahi Kasei Corporation) as the polyphenylene ether-based resin (PPE) and 80 mass% of GP685 (manufactured by PS Japan Corporation) as the general-purpose polystyrene resin (PS) was extruded using an extruder after being heated and melted kneaded to produce base material resin pellets.
The Tsp of the resulting base material resin was 136 °C.
The base material resin pellets were charged into a pressure-resistant container, the gas in the container was replaced with dry air, and carbon dioxide gas was injected as a foaming agent to impregnate the base material resin pellets with 4 mass% of carbon dioxide over 4 hours under conditions of a pressure of 2.4 MPa and a temperature of 20 °C.
The base material resin pellets were foamed in a foaming furnace with pressurized water vapor while the stirring blade was rotated at 77 rpm to yield expandable beads. The foaming temperature at this time was 138 °C.
The resulting expandable beads were molded with cracking of 0 mm as in Example 1. As in Comparative Example 1, voids were observed in both the large board molded body and the thickness-varied molded body, and the external appearance was inferior. As in Comparative Example 1, the variation of the expansion ratio of the thickness-varied molded body was also significant.

The results of each measurement and evaluation of the obtained expandable beads and molded bodies are summarized in Table 1.

[Comparative Example 5]

To 100 parts by mass of the same base material resin as in Comparative Example 3, 10 parts by mass of n-pentane (boiling point: 36.1 °C) as the foaming agent were added, and the mixture was heat kneaded in an extruder to obtain unexpanded resin particles.

The resin particles were foamed in a foaming furnace with pressurized water vapor while the stirring blade was rotated at 77 rpm to yield expandable beads. The foaming temperature at this time was 148 °C.

The resulting expandable beads were molded with cracking of 0 mm as in Example 1. As in Comparative Example 1, voids were observed in both the large board molded body and the thickness-varied molded body, and the external appearance was inferior. As in Comparative Example 1, the variation of the expansion ratio of the thickness-varied molded body was also significant.

The results of each measurement and evaluation of the obtained expandable beads and molded bodies are summarized in Table 1.

[Table 1]

| | | | | | Examples | | | | Comparative Examples | | | | |
|---|---|---|---|---|---|---|---|---|---|---|---|---|---|
| | | | | | 1 | 2 | 3 | 4 | 1 | 2 | 3 | 4 | 5 |
| Base material resin | Composition | Thermoplastic resin | PPE | mass% | 73 | 73 | 73 | 40 | 73 | 73 | 30 | 20 | 30 |
| | | | PS | mass% | 15 | 15 | 15 | 60 | 15 | 15 | 70 | 80 | 70 |
| | | | HIPS | mass% | 12 | 12 | 12 | - | 12 | 12 | - | - | - |
| | | Additive | Flame retardant | parts by mass | 22 | 22 | 22 | - | 22 | 22 | - | - | - |
| | Physical property | Softening point Tsp | | °C | 140 | 140 | 140 | 150 | 140 | 140 | 144 | 136 | 144 |
| Expandable beads | Manufacturing | Heating medium | | - | Hot air | Hot air | Hot air | Hot air | Steam | Steam | Steam | Steam | Steam |
| | | Foaming agent | | - | CO2 | CO2 | CO2 | CO2 | CO2 | CO2 | CO2 | CO2 | n-pentane |
| | | Leaving time before foaming of impregnated base resin pellets | | seconds | 0 | 30 | 0 | 0 | 0 | 0 | 0 | 0 | 0 |
| | | Foaming temperature | | °C | 153 | 153 | 165 | 157 | 143 | 143 | 143 | 138 | 148 |
| | | Expansion ratio | | cc/g | 5.1 | 4.8 | 6.8 | 10.1 | 7.1 | 7.1 | 19.5 | 23 | 8.4 |
| | Physical properties | Heat shrinkage rate | | % | 26 | 28 | 11 | 28 | 42 | 42 | 54 | 34 | 38 |
| | | Average particle diameter | | mm | 1.72 | 1.71 | 1.81 | 2.18 | 1.84 | 1.84 | 2.76 | 2.91 | 1.92 |
| | | Average thickness of skin layer | | mm | 10.5 | 19.5 | 8.8 | 6.5 | 8.3 | 8.3 | 2.3 | 1.8 | 0.5 |
| | | Proportion of average thickness of skin layer to average particle diameter | | % | 0.61 | 1.14 | 0.49 | 0.30 | 0.45 | 0.45 | 0.08 | 0.06 | 0.03 |
| Large board molded body | Manufacturing | Cracking | | mm | 0 | 0 | 0 | 0 | 0 | 2 | 0 | 0 | 0 |
| | | Expansion ratio | | cc/g | 8.0 | 7.5 | 108 | 14.9 | 11 | 9.2 | 30.1 | 35 | 13.2 |
| | Physical properties | External appearance | | - | O | O | O | O | X | O | X | X | X |
| | | Thickness accuracy | | - | O | O | O | O | O | X | O | O | O |

(continued)

| | | | | Examples | | | | Comparative Examples | | | | |
|---|---|---|---|---|---|---|---|---|---|---|---|---|
| | | | | 1 | 2 | 3 | 4 | 1 | 2 | 3 | 4 | 5 |
| Thickness-varied molded body | Manufacturing | Cracking | mm | 0 | 0 | 0 | 0 | 0 | 2 | 0 | 0 | 0 |
| | Physical properties | External appearance | - | O | O | O | O | X | O | X | X | X |
| | | Variation in expansion ratio | - | O | O | O | O | X | X | X | X | X |

## INDUSTRIAL APPLICABILITY

Since the molded body obtained by using the expandable beads of the present disclosure has excellent expandability upon the molding process, it can be used for automotive components, various tanks, and other components that are used in high-temperature environments and require heat insulation property. In particular, molding of thin parts can be performed well, making it easy to apply to automotive components and electronic devices where space is limited. It is also very useful because it achieves the thickness accuracy and expansion ratio accuracy required for automotive components, etc., while achieving weight reduction.

## REFERENCE SIGNS LIST

1 Skin layer
2 Cell

## Claims

1. Expandable beads comprising a base material resin containing a thermoplastic resin, and having a heat shrinkage rate when heated at Tsp + 10 °C for 5 minutes of 30% or less, where Tsp is a softening point of the base material resin.

2. The expandable beads according to claim 1, wherein the softening point Tsp of the base material resin is 130 °C or higher.

3. The expandable beads according to claim 1 or 2, wherein an average thickness of a skin layer defining a surface of the expandable beads is 0.2 to 2.0% of an average particle diameter of the expandable beads.

4. The expandable beads according to claim 1 or 2, wherein the base material resin comprises a polyphenylene ether-based resin.

5. A molded body comprising the expandable beads according to claim 1 or 2.

6. A method of producing the expandable beads according to claim 1 or 2, comprising performing foaming at Tsp + 5 °C to Tsp + 40 °C.

FIG. 1

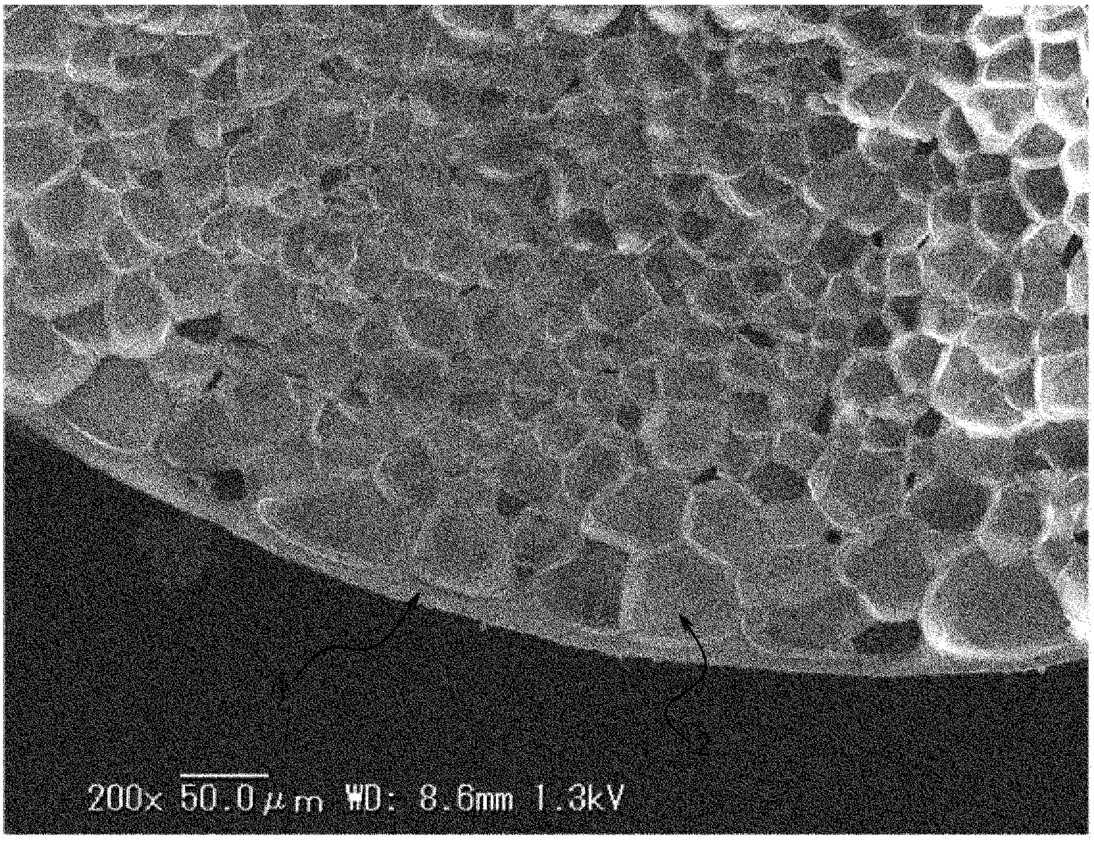

FIG. 2

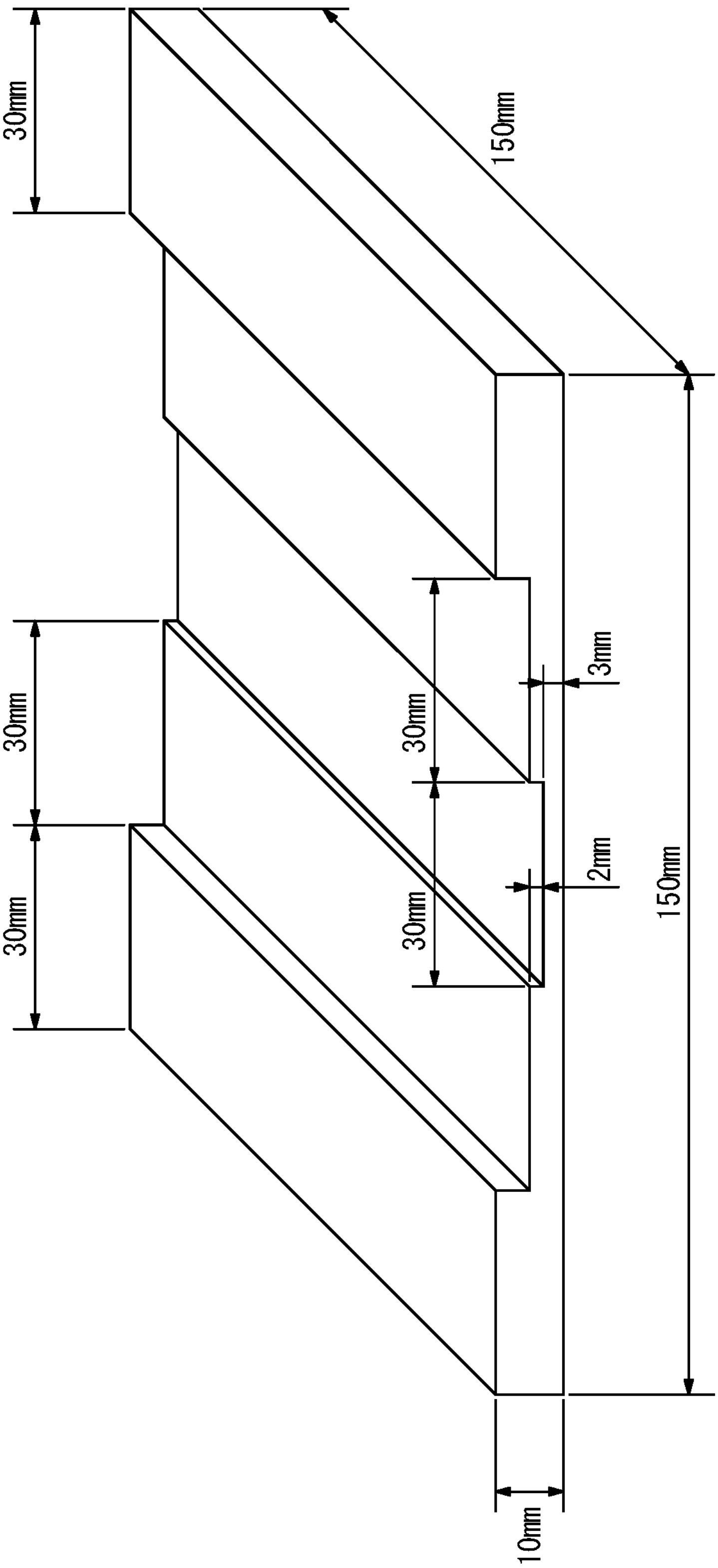

**INTERNATIONAL SEARCH REPORT**

International application No. **PCT/JP2022/026424**

**A. CLASSIFICATION OF SUBJECT MATTER**

***C08J 9/228***(2006.01)i; ***B29C 44/00***(2006.01)i; ***B29C 44/44***(2006.01)i
FI: C08J9/228 CEZ; B29C44/00 G; B29C44/44

According to International Patent Classification (IPC) or to both national classification and IPC

**B. FIELDS SEARCHED**

Minimum documentation searched (classification system followed by classification symbols)

C08J9/00-9/42; B29C44/00-44/60; B29C67/20

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 4-122741 A (GENERAL ELECTRIC CO.) 23 April 1992 (1992-04-23)<br>claims, paragraphs [0002], [0024], [0025], [0031]-[0041], table 1, examples | 1, 3-6<br>2 |
| X<br>A | JP 2018-175862 A (ADIDAS AG) 15 November 2018 (2018-11-15)<br>claims, paragraphs [0009], [0040], [0044], [0046], examples | 1-2, 5<br>3-4, 6 |
| A | JP 3-192135 A (GENERAL ELECTRIC CO.) 22 August 1991 (1991-08-22)<br>whole document | 1-6 |
| A | JP 3-217437 A (MONTEDIPE SPA) 25 September 1991 (1991-09-25)<br>whole document | 1-6 |

☐ Further documents are listed in the continuation of Box C.  ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **15 August 2022** | **23 August 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2022/026424**

| Patent document cited in search report | Publication date (day/month/year) | Patent family member(s) | Publication date (day/month/year) |
|---|---|---|---|
| JP 4-122741 A | 23 April 1992 | US 5064869 A<br>claims, column 1, lines 16-26, column 5, lines 21-44, column 6, line 45 to column 8, line 61, examples<br>EP 436847 A2 | |
| JP 2018-175862 A | 15 November 2018 | US 2018/0290349 A1<br>claims, paragraphs [0029], [0058], [0064], [0066], examples<br>EP 3387936 A1<br>CN 108688041 A<br>TW 201838804 A | |
| JP 3-192135 A | 22 August 1991 | US 5128073 A<br>whole document<br>EP 425886 A2 | |
| JP 3-217437 A | 25 September 1991 | US 5086080 A<br>whole document<br>EP 408901 A2 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2011019057 A1
- JP S4638359 B
- JP S5122951 B
- JP H446217 B
- JP H649795 B
- JP H622919 B
- JP H4372630 A